# EUROPÄISCHE PATENTANMELDUNG

(11) **EP 0 722 768 A1**
(43) Veröffentlichungstag der Anmeldung: **24.07.1996**
(21) Anmeldenummer: 95119964.5
(22) Anmeldetag: 15.12.1995
(51) Int. Cl.: B01D 63/08, B01D 25/21, B01D 69/10

(54) **Querstromblockfilter**

(30) Priorität: 20.01.1995 DE 19501639
(71) Anmelder: OXYPHEN GMBH DRESDEN, D-01474 Rossendorf (DE)
(72) Erfinder: Lück, Hans B., Dr. sc. nat., D-01309 Dresden (DE)
(74) Vertreter: Hanewinkel, Lorenz, Dipl.-Phys.

(57) **Zusammenfassung**

Querstromfilter aus einem Stapel (1) von langgestreckten endseitig geschlossenen Taschen (2) aus Filtermembranmaterial in deren Innenraum (I) jeweils ein Kunststoffgewebeeinlage (3) eingelagert ist und zwischen denen jeweils eine Trennlage aus Kunststoffgewebe geschichtet ist, wobei der Stapel (1) auf seinen Flachseiten der Taschen (2) längsseitig eng von einem Kunststoffmantel (5) der Stirnflansche (60) trägt, umgeben ist, der die Längsseiten der Taschen (2) eingegossen oder eingespritzt bis auf mindestens einen Öffnungsbereich (OB1) dicht einschließt, zu dem die Taschen (2) jeweils seitlich zu ihrem Innenraum (I) geöffnet sind und an den ein Anschlußflansch (70) außenseitig angeschlossen ist, wobei das Filtermembranmaterial aus einer Sicherheitsfilterfolie besteht, die aus einer Außenfolie mit engen Poren und einer Innenfolie, einem Sammlervlies, vorzugsweise mit größeren Poren, besteht, und die Innen- und Außenfolie jeweils entlang des Öffnungsbereiches (OB1, miteinander dicht verbunden sind.

## Beschreibung

Die Erfindung betrifft einen Querstromfilter aus einem Stapel von langgestreckten endseitig geschlossenen Taschen aus Filtermembranmaterial in deren Innenraum jeweils eine Einlage aus Kunststoffgewebe odgl. eingelagert ist und zwischen denen jeweils eine Trennlage aus Kunststoffgewebe odgl. geschichtet ist, wobei der Stapel auf seinen Flachseiten der Taschen längsseitig eng von einem Kunststoffmantel, der Stirnflansche trägt, umgeben ist, der die Längsseiten der Taschen eingegossen oder eingespritzt bis auf mindestens einen Öffnungsbereich dicht einschließt, zu dem die Taschen jeweils seitlich zu ihrem Innenraum geöffnet sind und an den ein Anschlußflansch außenseitig angeschlossen ist.

Ein derartiges Filter ist aus der DE 39 12 741 A1 bekannt. Dieses Blockfilter hat jedoch den Nachteil, daß es keine Sicherheit gegen den Durchtritt größerer Partikel als solcher mit der vorgegebenen Porenweite gewährleistet, da ineinandergehende statistische Porenanhäufungen und im Langzeitbetrieb entstehende Mikrorisse der Membran nicht auszuschließen sind. Außerdem bieten die Verguß-Verbindungsstellen von der Kunststoffvergußmasse zu dem Mantelrohr und den metallischen Flanschen nur eine beschränkte Dauerfestigkeit bei wechselnd hohen Drücken und bei Temperaturwechseln, die insbes. beim Umschalten zwischen einem Filtrierbetrieb bei einem Einsatz im Nahrungsmittelbereich bei einer üblichen Temperatur von 1 bis 2° C auftreten. An den Verbindungsstellen auftretende Mikrorisse bieten Mikroben unerwünschte Ansiedlungsmöglichkeiten. Auch hat es sich gezeigt, daß die Stirnseiten der Filtermembrantaschen durch die hohe Anströmgeschwindigkeit im Dauerbetrieb durch Wirbelbildung in der Flüssigkeit beschädigt und u.U. undicht werden.

Weiterhin ist es aus der DE 25 53 099 C2 bekannt, den Druckabfall quer zur Filtermembran über die Länge des Querstromes der zu filtrierenden Flüssigkeit etwa konstant zu halten, indem in dem Filtratkanal ein etwa gleicher Längsdruckabfall wie in dem Hauptkanal durch einen Filtratumlauf mittels einer Pumpe erzeugt wird. Der Druckabfall in der Membran wird relativ niedrig gehalten, so daß eine optimale Filterung stattfindet, ein Festsetzen der zurückgehaltenen Stoffe in den Poren weitgehend vermieden wird, wodurch eine Reinigung wirksam erfolgen kann, und eine Beschädigung der Membran durch hohen Druck vermieden wird.

Es ist Aufgabe der Erfindung, das eingangs bezeichnete Filter dahingehend zu verbessern, daß es eine hohe Sicherheit gegen ein Durchtreten von Partikeln, die größer als die vorgegebene Porenweite sind, und gegen schleichende Zerstörung insbesondere unter wechselnden Betriebsbedingungen aufweist.

Die Lösung ist dadurch gegeben, daß das Filtermembranmaterial aus einer Sicherheitsmembran besteht, die aus einer Außenmembran mit engen Poren und einer Innenmembran, einem Sammelvlies, vorzugsweise mit größeren Poren, besteht, und die Innen- und Außenmembran jeweils entlang des Öffnungsbereiches miteinander mit einem Schweißrand dicht verbunden sind und nur die Innenfolien jeweils mit ihrem Innenraum zum zugehörigen Anschlußflansch geöffnet sind.

Die Verwendung eines doppelschichtigen Filtermembranmaterials erbringt eine große Sicherheit dafür, daß durch etwa vorhandene größere Porenbereiche der Außenmembran hindurchtretende Partikel in der zweiten Membran, der Vliesschicht, abgefangen werden und dadurch die "undichte Stelle" abgedichtet wird und ein Durchtreten in den Innenraum verhindert wird.

Die beiden Folien sind entlang der Stirnseite und entlang des Öffnungsbereiches jeweils durch eine Stirnschweißnaht bzw. einen Schweißrand miteinander dicht verbunden, so daß aus dem Zwischenraum kein Filtrat austreten kann. Anstelle einer Schweißnaht kann auch eine geeignete Klebverbindung die Dichtigkeit herstellen. Die stirnseitige Schweißnaht ist außerdem vorzugsweise durch eine Edelstahlborde u-förmig eingefaßt, wodurch ein Schutz gegen die Zerstörung durch eine schnelle Anströmung gegeben ist.

Der Hauptstrom (Querstrom) wird zwischen den Filtermembrantaschen in Längsrichtung hindurchgeleitet. Damit eine gleichmäßige Durchströmung stattfindet, befinden sich Trennlagen aus Kunststoffgewebe zwischen den Taschen. Eine Verringerung des Durchströmwiderstandes ist dadurch erreicht, daß jeweils Gruppen von Querfäden aus dem Gewebe entfernt sind, so daß nur einzelne Querfäden, beispielsweise im Abstand von 1 cm, übrig gelassen sind und die Längsfadenabschnitte an den freigelegten Stellen durch das vorherige Verweben gewellt ausgebildet sind. Dies sorgt für eine gute Abstandshaltung zwischen den Taschen.

Längsseiten von einem Kunststoffmantel umgeben, der die Längskanten der Taschen einschließt und eingebettet hält.

Nahe der Enden in Längsrichtung sind jeweils in dem Kunststoffmantel Öffnungsbereiche ausgespart, in denen die Taschen zum Innenraum, der das Filtrat führt, geöffnet sind. Im Randbezirk um den Öffnungsbereich herum sind die beiden Membranschichten jeweils verschweißt und ist nur der Innenraum, der mit einem Kunststoffgewebe ausgefüllt ist, zugänglich. Die Öffnungsbereiche sind jeweils von einem Anschlußflansch dicht umgeben, der der Um- bzw. Ableitung des Filtrats dient.

Der Kunststoffmantel ist in seinen Endbereichen und verteilt über seine gesamte Länge abschnittweise mit Stahlarmierungen versehen. Auf die Stirnseiten sind vermittels der Stahlarmierungen Edelstahlflanschköpfe aufgesetzt. Die Abdichtung ist durch eine elastische Dichtschnur gegeben, die gegen den Kunststoffmantel gepreßt wird. Zur Aufnahme der axialen Kräfte weist der Kunststoffmantel querlaufende Nuten auf, in denen Rippen oder Paßstücke der Stahlarmierung axialen Halt finden.

Vorteilhaft ist es vorgesehen, zwischen den Filtratanschlußflanschen eine Filtratumwälzpumpe anzuschließen, die etwa den gleichen Längsdruckabfall an dem Filtratkanal erzeugt, der auch in dem Hauptkanal auftritt. Durch entsprechende Drosselung des Filtratabflußes wird sichergestellt, daß nur ein relativ niedriger Querdruck an den Filtermembranen auftritt, so daß diese vor Verstopfung und Beschädigung weitgehend geschützt sind.

Vorteilhafte Ausgestaltungen sind in den Figuren 1 bis 5 dargestellt.
- Fig. 1: zeigt einen Endabschnitt des Filterblocks in Aufsicht auf den Filtratflansch;
- Fig. 2: zeigt den Endabschnitt in Aufsicht seitlich zum Filtratflansch;
- Fig. 3: zeigt einen Querschnitt III-III;
- Fig. 4: zeigt in anderem Maßstab schematisch einen Ausschnitt des Filterstapels abschnittweise geöffnet;
- Fig. 5: zeigt ein Übersichtsschema einer Gesamtfilteranordung.

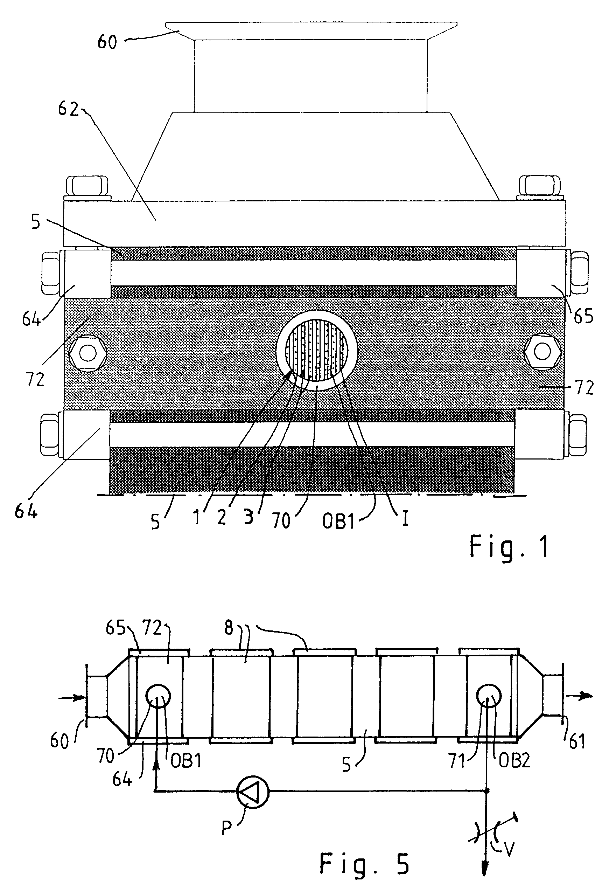

Figur 1 zeigt einen Abschnitt eines Querstromfilterblockes in Aufsicht auf einen Filtratflanschanschluß (70). Der Filterblock besteht aus einem Stapel (1) von Filtertaschen (2), die von einem Kunststoffmantel (5) umspritzt umgeben sind. Stirnseitig trägt der Kunststoffmantel (5) jeweils einen Edelstahlflanschkopf (62) an den ein Stirnflasch (60) angeschweißt ist. Der Flanschkopf ist mit Befestigungsplatten (64, 65) verschraubt, welche durch Zugbolzen miteinander beidseitig des Kunststoffmantels (5) gehalten sind. Zwischen den Befestigungsplatten (64, 65) ist eine stegartige Dichtplatte (72) eingeschraubt, welche auf die Seite des Kunststoffmantels (5) dicht aufgesetzt ist. Unter dieser Dichtplatte (72) liegt der Öffnungsbereich, zu dem die Innenräume (I) der Filtertaschen (2) hin geöffnet sind. In den Innenräumen liegt jeweils eine Einlage (3) aus Kunststoffgewebe, die das Abströmen des Filtrats erleichtern.

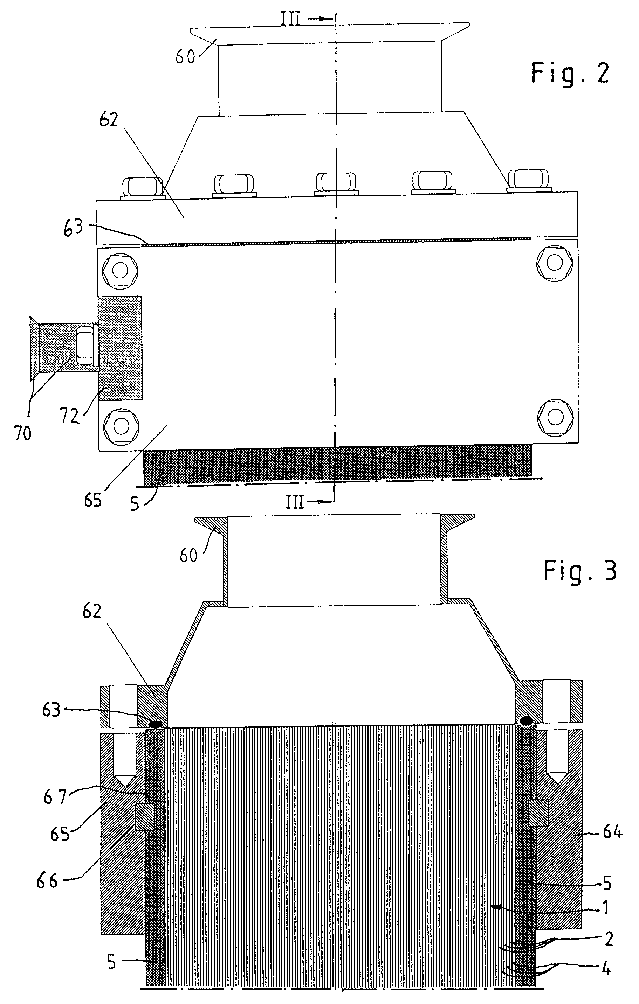

Figur 2 zeigt wiederum den Endabschnitt eines Filterblockes in einer Seitenansicht. Es ist ersichtlich, wie die Dichtplatte (72) in die Befestigungsplatte (65) eingesetzt ist. Die Dichtplatte (72) trägt den angeschweißten Edelstahlstutzen und -flansch (70) für das Filtrat.

Stirnseitig erkennt man die auf die Befestigungsplatten (65) mit einer Dichtung (63) aufgeschraubte Anordnung des Flansches (60) mit dem Flanschkopf (62). Der Kunststoffmantel (5) setzt sich unter der Befestigungsplatte (65) bis an die Dichtung (63) fort.

Figur 3 zeigt einen Querschnitt III-III durch den Endbereich des Blockfilters, und die Dichtung (63) zwischen dem Flanschkopf (62) und dem Kunststoffmantel (5) ist dargestellt. Die stirnseitigen Schraubverbindungen zu den Befestigungsplatten (64, 65) finden ihren Widerhalt für die Axialkräfte durch die Paßstücke (66), welche in Nuten (67) im Kunststoffmantel (5) und in den Befestigungsplatten (64, 65) stecken.

Der Stapel (1) der Filtertaschen (2) ist jeweils mit Trennlagen (4) schichtweise zusammengesetzt.

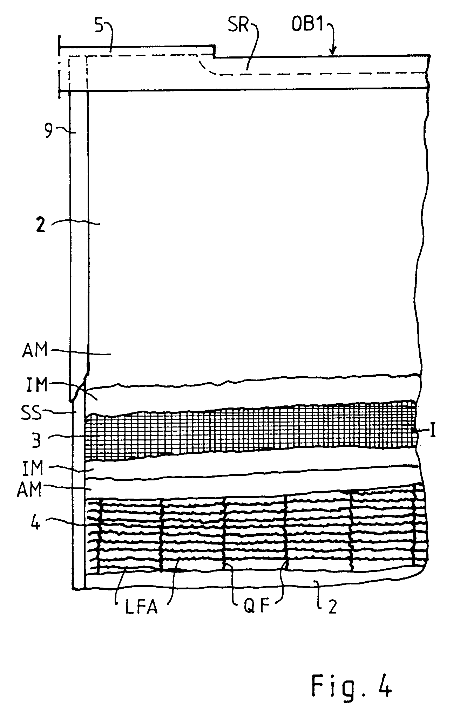

Figur 4 zeigt einen Ausschnitt aus dem Schichtaufbau des Stapels. Die Taschen (2) sind jeweils mit einer Stirnschweißung (SS) stirnseitig verschlossen. Die Stirnschweißung (SS) ist mit einer Edelstahlborde (9) umschlungen. Die Taschen (2) bestehen aus einer Doppelmembranschicht, einer engporigen Außenmembran (AM) und einer im allgemeinen etwas großporigeren, vliesverstärkten Innenmembran (IM). Der Innenraum (I) zwischen den Innenmembranen (IM) ist mit einer Gewebeeinlage (3) bestückt, so daß dort der Filtratabfluß erleichtert ist. Randseitig sind die Taschen (2) in den Kunststoffmantel (5) eingegossen, der in dem Öffnungsbereich (OB1) bis in die Taschen hinein ausgefräst ist, so daß die Innenräume (I) dort freiliegen. Um den Öffnungsbereich (OB1) herum sind die Taschen (2) jeweils mit einem Schweißrand (SR) versehen, welcher die beiden Folienschichten (IM, AM) miteinander dicht verbinden.

Zwischen den einzelnen Taschen (2) liegen die aus Kunststoffgewebe bestehenden Trenngewebeschichten (4). Besonders vorteilhaft hat es sich erwiesen, dort jeweils gruppenweise Querfäden zu ziehen und nur einige Querfäden (QF) als Haltefäden zu belassen. Die Längsfadenabschnitte (LFA) zwischen den Querfäden (QF) sind durch das vorhergehende verweben wellig ausgebildet und bieten einen geringen Längswiderstand für die Strömung.

Figur 5 zeigt ein Übersichtsbild über einen Gesamtfilterblock. Die beiden Hauptflansche (60, 61) sind an den endseitigen Befestigungsplatten (64, 65) jeweils verschraubt, und zwischen den Befestigungsplatten erstrecken sich die Dichtplatten (72) mit den Filtratanschlußflanschen (70, 71), die vor den Öffnungsbereichen (OB1, OB2) liegen.

Über die Länge verteilt ist der Kunststoffmantel (5) durch weitere Metallklammern (8) armiert, so daß der Kunststoffmantel nur eine mäßige Wandstärke benötigt und die Armierung die seitlichen Druckkräfte abfängt. Die Verschraubungen der Armierungsplatten sind den Verschraubungen der Befestigungsplatten (64, 65) und der Dichtplatte (72) ähnlich. Die Längsteilung der Armierungen hat den Vorteil, daß der Kunststoffmantel (5) sich ausdehnen kann und nur geringe Scherkräfte auf den kurzen Armierungsabschnitten auftreten. Insbesondere bei der Umstellung vom Filterbetrieb auf den Reinigungsbetrieb Armierungsabschnitten auftreten. Insbesondere bei der Umstellung vom Filterbetrieb auf den Reinigungsbetrieb treten gewöhnlich Temperatursprünge von 50° C auf, welche zu einer erheblichen Ausdehnung bzw. Kontraktion des Kunststoffmantels führen. Die Festlegung der Flansche nahe der Stirnseiten des Kunststoffmantels hat den Vorteil, daß die Dichtigkeit ständig gewährleistet ist, da nur geringe Ausdehnungsunterschiede von den Dichtungen aufgenommen müssen.

Die Gesamtkonstruktion ist modular in der Stapelbildung und der Ausbildung der Armierung und Flansche, so daß unterschiedlich dicke Stapel und unterschiedlich lange Filter je nach den Erfordernissen sehr leicht gefertigt werden können, wenn die Taschen aus dem Filtermaterial als Rollenware hergestellt werden und nur abgelängt zu werden brauchen.

Zwischen den Filtratflanschen (71, 70) ist eine Pumpe (P) vorgesehen, welche einen Druckabfall durch einen Filtratumlauf in den Innenräumen der Taschen über die Länge derselben herstellt. Die Pumpenleistung ist dabei so gesteuert, daß der Druckabfall demjenigen des Querstromes zwischen den Flanschen (60, 61) entspricht. Ein Abflußventil (V) des Filtrats ist so gesteuert, daß nur ein relativ geringer Druckabfall zwischen dem Querstrom und dem Filtrat über den gesamten Membranbereich auftritt. Praktische Daten für die Filtration von flüssigen Nahrungsmittel sind beispielsweise 5 bar am Zutritt und 2 bar am Austritt des Querstromes und 0,3 bar Druckabfall an der Membran.

## Patentansprüche

1. Querstromfilter aus einem Stapel (1) von langgestreckten endseitig geschlossenen Taschen (2) aus Filtermembranmaterial in deren Innenraum (I) jeweils eine Einlage (3) aus Kunststoffgewebe odgl. eingelagert ist und zwischen denen jeweils eine Trennlage (4) aus Kunststoffgewebe odgl. geschichtet ist, wobei der Stapel (1) auf seinen Flachseiten der Taschen (2) längsseitig eng von einem Kunststoffmantel (5), der Stirnflansche (60, 61) trägt, umgeben ist, der die Längsseiten der Taschen (2) eingegossen oder eingespritzt bis auf mindestens einen Öffnungsbereich (OB1, OB2) dicht einschließt, zu dem die Taschen (2) jeweils seitlich zu ihrem Innenraum (I) geöffnet sind und an den ein Anschlußflansch (70, 71) außenseitig angeschlossen ist,
dadurch gekennzeichnet, daß das Filtermembranmaterial aus einer Sicherheitsfilterfolie besteht, die aus einer Außenfolie (AF) mit engen Poren und einer Innenfolie (IF), einem Sammelvlies, vorzugsweise mit größeren Poren, besteht, und die Innen- und Außenfolie jeweils entlang des Öffnungsbereiches (OB1, OB2) miteinander mit einem Schweißrand (SR) dicht verbunden sind und nur die Innenfolien (IF) jeweils mit ihrem Innenraum (I) zum zugehörigen Anschlußflansch (70, 71) geöffnet sind.

2. Querstromfilter nach Anspruch 1, dadurch gekennzeichnet, daß die Trennlagen (4) aus einem Kunststoffgewebe bestehen, aus dem abschnittweise Querfadengruppen gezogen sind, so daß zwischen den einzelnen belassenen Querfäden (QF) gewellte Längsfadenabschnitte (LFA) liegen.

3. Querstromfilter nach Anspruch 1 oder 2, dadurch gekennzeichnet, daß längsseitig des Stapels (1) jeweils nahe dessen beiden Enden je einer der Öffnungsbereiche (OB1, OB2) mit seinem zugehörigen seitlichen Anschlußflansch (70, 71) angeordnet ist.

4. Querstromfilter nach einem der vorstehenden Ansprüche, dadurch gekennzeichnet, daß die Taschen (2) jeweils stirnseitig eine Stirnschweißzone (SS) aufweisen, die von einer Bewehrung (8) aus einer u-förmigen Edelstahlborde umfaßt sind.

5. Querstromfilter nach einem der vorstehenden Ansprüche, dadurch gekennzeichnet, daß die Stirnflansche (60, 61) jeweils an einem Edelstahlflanschkopf (62) angeschweißt sind, der mit einer Dichtschnur (63) stirnseitig auf den Kunststoffmantel (5) aufgesetzt ist und mit Befestigungsplatten (64, 65) verschraubt ist, die durch Rippen oder Paßstücke (66) in Quernuten (67) des Kunststoffmantels (5) gehalten sind.

6. Querstromfilter nach Anspruch 5, dadurch gekennzeichnet, daß die seitlichen Anschlußflansche (70, 71) jeweils mit einer Dichtplatte (72) aus Edelstahl verschweißt ist, die zwischen den zugehörigen Befestigungsplatten (64, 65) gehalten und um den zugehörigen Öffnungsbereich (OB1, OB2) im Kunststoffmantel (5) abdichtet angepreßt sind.

7. Querstromfilter nach einem der vorstehenden Ansprüche, dadurch gekennzeichnet, daß der Kunststoffmantel (5) abschnittsweise in Längsrichtung mit Stahlklammern (8) armiert umgeben ist.

8. Querstromfilter nach einem der vorstehenden Ansprüche, dadurch gekennzeichnet, daß zwischen den seitlichen Anschlußflanschen (70, 71) eine Filtratumlaufpumpe (8) angeschlossen ist, die etwa den gleichen Längsdruckabfall gleichgerichtet erzeugt, der auch durch den Querstrom zwischen den Stirnflanschen (70, 71) auftritt, und daß das Filtrat bei einem an den Filtermembranen abfallenden vorgegebenen Querdruck abgeleitet wird, der wesentlich niedriger als der Längsdruckabfall ist.

9. Querstromfilter nach Anspruch 8, dadurch gekennzeichnet, daß der Längsdruckabfall etwa 3 bar und der Querdruck etwa 0,3 bar beträgt.
